# EUROPEAN PATENT APPLICATION

(11) **EP 1 933 404 A1**
(43) Date of publication of application: **18.06.2008**
(21) Application number: 06797995.5
(22) Date of filing: 14.09.2006
(51) Int. Cl.: H01M 6/16

(54) **NON-AQUEOUS ELECTROLYTE FOR PRIMARY BATTERY, AND NON-AQUEOUS ELECTROLYTE PRIMARY BATTERY USING THE SAME**

(30) Priority: 14.09.2005 JP 2005266496; 14.09.2005 JP 2005266497
(71) Applicant: Mitsubishi Chemical Corporation, Minato-ku Tokyo 108-0014 (JP)
(72) Inventor: NODA, Daisuke, 1, Toho-ch, Yokkaichi-shi Mie 510-8530 (JP); TAKEDA, Masayuki, 1, Toho-cho, Yokkaichi-shi Mie 510-8530 (JP)
(74) Representative: HOFFMANN EITLE
(86) International application number: PCT/JP2006/318283
(87) International publication number: WO 2007/032443

(57) **Abstract**

It is an object to provide a non-aqueous electrolyte for use in a primary battery, which is advantageous in that the primary battery using the non-aqueous electrolyte suffers less lowering of voltage during the high-rate discharge and can work stably. Disclosed are a non-aqueous electrolyte for use in a primary battery, comprising at least one organic compound selected from the group consisting of 1,2-benzoquinone, 1,4-naphthoquinone, 1,2-naphthoquinone, 9,10-anthraquinone, 1,4-anthraquinone, acenaphthenequinone, and a derivative of 1,2-benzoquinone, 1,4-naphthoquinone, 1,2-naphthoquinone, 9,10-anthraquinone, 1,4-anthraquinone, acenaphthenequinone, or 1,4-benzoquinone; a non-aqueous electrolyte for use in a primary battery, comprising an organic compound exhibiting a reduction potential of 2.5 V or higher and a quantity of electricity in reduction reaction per electrode area of 1,000 mC/cm² or lower under specific conditions; and a non-aqueous electrolyte for use in a primary battery, having a reduction potential of 2.5 V or higher and a quantity of electricity in reduction reaction per electrode area of 1,000 mC/cm² or lower.

## Description

### Field of the Invention

The present invention relates to a non-aqueous electrolyte for a primary battery and a non-aqueous electrolyte primary battery using the same.

### Background Art

Lithium primary batteries using lithium metal or an alloy thereof in a negative electrode have high energy density and large capacity, and can be reduced in size and weight, and hence are used in a variety of applications, such as a main power source for small-size portable electric device and a power source backup for fixed-type electric device.

In recent years, an electric device uses an increased amount of electric power, and therefore a lithium primary battery enabling high-rate discharge is desired. However, a problem occurs in that the increase of a discharge current causes overvoltage during the discharge, so that the battery voltage is markedly lowered. For solving such a problem, an attempt is made to add propane sultone or ethylene sulfite to the electrolyte for a battery to suppress decomposition of the organic solvent at the positive electrode and to prevent the formation of a high-resistant film on the surface of the positive electrode, thus preventing the lowering of the battery voltage during the high-load discharge (see, for example, patent documents 1 and 2). Further, an attempt is made to use, as part of the organic solvent in the electrolyte, a cyclic ether compound having weak interaction with the solute to prevent the lowering of the battery voltage during the low-temperature, high-load discharge, which is caused when only an organic solvent having strong interaction with the solute is used (see, for example, patent document 3).

However, the improvements of performance battery in these attempts are not satisfactory, and further improvement has been expected.
[Patent document 1] Japanese Unexamined Patent Publication No. 2002-170575
[Patent document 2] Japanese Unexamined Patent Publication No. 2002-170576
[Patent document 3] Japanese Unexamined Patent Publication No. Hei 6-176769

### DISCLOSURE OF THE INVENTION

### Problems to be Solved by the Invention

An object of the present invention is to provide a non-aqueous electrolyte for a primary battery, which is advantageous in that the primary battery using the non-aqueous electrolyte suffers less lowering of voltage during the high-rate discharge and can work stably.

### Means to Solve the Problems

The present inventors have conducted extensive and intensive studies with a view toward solving the above problems. As a result, they have found that, when an organic compound to be contained in the non-aqueous electrolyte for a primary battery is appropriately selected or the non-aqueous electrolyte satisfies a specific requirement, there can be obtained a primary battery which suffers less lowering of voltage during the high-rate discharge and can work more stably than a conventional primary battery, and the present invention has been completed.

The present invention is directed to a non-aqueous electrolyte for a primary battery having a positive electrode and a negative electrode comprised of metallic lithium or a lithium alloy,
wherein the non-aqueous electrolyte for a primary battery comprises at least one organic compound selected from the group consisting of 1,2-benzoquinone, 1,4-naphthoquinone, 1,2-naphthoquinone, 9,10-anthraquinone, 1,4-anthraquinone, acenaphthenequinone, and a derivative of 1,2-benzoquinone, 1,4-naphthoquinone, 1,2-naphthoquinone, 9,10-anthraquinone, 1,4-anthraquinone, acenaphthenequinone or 1,4-benzoquinone,
and is also directed to a non-aqueous electrolyte primary battery having the non-aqueous electrolyte.

Further, the present invention is directed to a non-aqueous electrolyte for a primary battery having a positive electrode and a negative electrode comprised of metallic lithium or a lithium alloy,
wherein the non-aqueous electrolyte for a primary battery comprises at least one organic compound,
wherein the organic compound satisfies the requirement that a γ-butyrolactone solution of LiBF₄ having a concentration of 1 mol/l into which the organic compound is incorporated in an amount of 1.0% by weight has a reduction potential of 2.5 V or higher and a quantity of electricity in reduction reaction per electrode area of 1,000 mC/cm² or lower,
wherein the reduction potential is a potential at which a current flows at a current density of -0.5 mA/cm² when the potential of a working electrode is swept to the reduction side at a sweep rate of 5 mV/second at 25°C, as measured with respect to the solution contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side,
wherein the quantity of electricity in reduction reaction per electrode area is a value obtained by dividing an absolute value of quantity of electricity flowing when the potential is swept from the self-potential to 0.2 V at 25°C by the bottom area of a working electrode, wherein the quantity of electricity is as measured with respect to the solution contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side, and is also directed to a non-aqueous electrolyte primary battery having the non-aqueous electrolyte.

Further, the present invention is directed to a non-aqueous electrolyte for a primary battery having a positive electrode and a negative electrode comprised of metallic lithium or a lithium alloy,
wherein the non-aqueous electrolyte has a reduction potential of 2.5 V or higher and a quantity of electricity in reduction reaction per electrode area of 1,000 mC/cm² or lower,
wherein the reduction potential is a potential at which a current flows at a current density of -0.5 mA/cm² when the potential of a working electrode is swept to the reduction side at a sweep rate of 5 mV/second at 25°C, as measured with respect to the non-aqueous electrolyte contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side,
wherein the quantity of electricity in reduction reaction per electrode area is a value obtained by dividing an absolute value of quantity of electricity flowing when the potential is swept from the self-potential to 0.2 V at 25°C by the bottom area of a working electrode, wherein the quantity of electricity is as measured with respect to the non-aqueous electrolyte contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side,
and is also directed to a non-aqueous electrolyte primary battery having the non-aqueous electrolyte.

### Effect of the Invention

By using the non-aqueous electrolyte of the present invention, there can be provided a non-aqueous electrolyte primary battery which advantageously suffers less lowering of voltage during the high-rate discharge and can work stably.

### BEST MODE FOR CARRYING OUT THE INVENTION

Hereinbelow, the present invention will be described in detail. Like a non-aqueous electrolyte generally used in primary battery, the non-aqueous electrolyte for primary battery of the present invention comprises mainly a solute and a non-aqueous solvent which dissolves therein the solute.

As a solute, a lithium salt is used. With respect to the lithium salt, there is no particular limitation as long as it can be used in this application, and, as examples of lithium salts, there can be mentioned the following salts.
1) Inorganic lithium salts: inorganic fluorides, such as LiAsF₆, LiPF₆ and LiBF₄; and perhalogenates, such as LiClO₄, LiBrO₄ and LiIO₄.
2) Organic lithium salts: lithium organoborates, such as LiB (C₂O₄)₂ and LiB (C₆H₅)₄; alkanesulfonates, such as LiCH₃SO₃; perfluoroalkanesulfonic acid imide salts, such as LiN (SO₂CF₃)₂ and LiN(SO₂C₂F₅)₂; and perfluoroalkanesulfonates, such as LiCF₃SO₃.
   These lithium salts can be used individually or in combination.

Of these, from the viewpoint of achieving excellent stability of the battery properties, preferred is LiBF₄, LiClO₄ or LiCF₃SO₃.

The concentration of the lithium salt in the non-aqueous electrolyte is generally 0.1 mol/l or more, preferably 0.5 mol/l or more, and generally 2.5 mol/l or less, preferably 1.5 mol/l or less. When the lithium salt concentration is too high or too low, the electrolyte is possibly reduced in electrical conductivity, but, when the above range is considered, the electrolyte can be prevented from being reduced in electrical conductivity, thus obtaining excellent battery properties.

With respect to the non-aqueous solvent, there is no particular limitation, and a non-aqueous solvent appropriately selected from those conventionally proposed as solvents for non-aqueous electrolyte can be used. Examples of such solvents include cyclic carbonates (cyclic carbonic acid esters), chain carbonates (chain carbonic acid esters), cyclic esters (cyclic carboxylic acid esters), chain esters (chain carboxylic acid esters), cyclic ethers, chain ethers and cyclic sulfones.

Examples of cyclic carbonates include ethylene carbonate, propylene carbonate and butylene carbonate. Examples of chain carbonates include dimethyl carbonate, diethyl carbonate and ethylmethyl carbonate. Examples of cyclic esters include γ-butyrolactone and γ-valerolactone. Examples of chain esters include methyl acetate and methyl propionate. Examples of cyclic ethers include tetrahydrofuran, 2-methyltetrahydrofuran, tetrahydropyran, 1,3-dioxolane, 1,4-dioxane and 1,3-dioxane. Examples of chain ethers include diethyl ether, 1,2-dimethoxyethane, 1,2-diethoxyethane, diethylene glycol dimethyl ether, triethylene glycol dimethyl ether and tetraethylene glycol dimethyl ether. Examples of cyclic sulfones include sulfolane. These non-aqueous solvents can be used individually or in combination.

From the viewpoint of achieving excellent electrical conductivity of the electrolyte and excellent operation stability of the battery, it is preferred that a high-viscosity solvent, such as ethylene carbonate, propylene carbonate, butylene carbonate or γ-butyrolactone, and a low-viscosity solvent, such as dimethyl carbonate, methyl acetate, methyl propionate, 1,2-dimethoxyethane or diethylene glycol dimethyl ether, are used in combination.
Of these, especially preferred is γ-butyrolactone from the viewpoint of achieving excellent storage stability at high temperature.

In the first embodiment of the present invention, the non-aqueous electrolyte comprises at least one organic compound selected from the group consisting of 1,2-benzoquinone, 1,4-naphthoquinone, 1,2-naphthoquinone, 9,10-anthraquinone, 1,4-anthraquinone, acenaphthenequinone, and a derivative of 1,2-benzoquinone, 1,4-naphthoquinone, 1,2-naphthoquinone, 9,10-anthraquinone, 1,4-anthraquinone, acenaphthenequinone or 1,4-benzoquinone. The derivative is generally a substituted derivative of 1,2-benzoquinone, 1,4-naphthoquinone, 1,2-naphthoquinone, 9,10-anthraquinone, 1,4-anthraquinone, acenaphthenequinone or 1,4-benzoquinone, which has at least one hydrogen atom replaced by a substituent.

Examples of substituents introduced into the substituted derivative include a halogen atom, a lower alkyl group, a lower alkoxy group, a phenyl group, a cyano group, a hydroxyl group, an amino group, a nitro group, a carboxyl group and a sulfonyl group. From the viewpoint of obtaining excellent battery performance stability and suitable reduction potential, a preferred substituent is a halogen atom, a lower alkyl group or a lower alkoxy group.

Each substituent introduced into the substituted derivative preferably has a molecular weight of 200 or less, more preferably 100 or less. The number of the substituents introduced is preferably four or less, more preferably two or less. When the substituent introduced has too large a molecular weight or the number of the substituents introduced is too large, there is a possibility that the solubility of the substituted derivative in the electrolyte becomes poor or the reaction response during the discharge becomes poor.

Examples of halogen atoms include fluorine, chlorine, bromine and iodine, and preferred is fluorine.

Examples of lower alkyl groups include alkyl groups having 1 or more, and 4 or less carbon atoms. These may be either linear or branched. Preferred is methyl, ethyl, isopropyl or tert-butyl.

Examples of lower alkoxy groups include alkoxy groups having 1 or more, and 4 or less carbon atoms. The alkyl portions in these alkoxy groups may be either linear or branched. Preferred is methoxy or ethoxy.

As specific examples of the organic compounds used in the present invention, there can be mentioned the following compounds:
1,2-benzoquinone and 1,2-benzoquinone derivatives such as 3-tert-butyl-5-methoxy-1,2-benzoquinone, 4-tert-butyl-5-methoxy-1,2-benzoquinone, 3,5-di-tert-butyl-1,2-benzoquinone, 4-methyl-1,2-benzoquinone, 3,6-di-tert-butyl-1,2-benzoquinone and 4,5-dimethoxy-1,2-benzoquinone; 1,4-naphthoquinone and 1,4-naphthoquinone derivatives such as 2-methyl-1,4-naphthoquinone, 6-methyl-1,4-naphthoquinone, 6,7-dimethyl-1,4-naphthoquinone, 2-methoxy-1,4-naphthoquinone, 2-methyl-3-methoxy-1,4-naphthoquinone, 5-methoxy-1,4-naphthoquinone, 2,3-diethoxy-1,4-naphthoquinone, 2,7-di-tert-butyl-1,4-naphthoquinone and 2,6-di-tert-butyl-1,4-naphthoquinone; 1,2-naphthoquinone and derivatives thereof; 9,10-anthraquinone and 9,10-anthraquinone derivatives such as 2-ethyl-9,10-anthraquinone, 2-tert-butyl-9,10-anthraquinone, 2-methyl-9,10-anthraquinone, 1,4-dimethyl-9,10-anthraquinone, 2-methoxy-9,10-anthraquinone, 1-methoxy-9,10-anthraquinone, 1,4-difluoro-9,10-anthraquinone, 1,4-dimethoxy-9,10-anthraquinone, 1-methoxy-2-methyl-9,10-anthraquinone, 2,6-dimethoxy-9,10-anthraquinone, 1,2-dimethyl-9,10-anthraquinone, 1,5-dimethoxy-9,10-anthraquinone, 2,7-dimethyl-9,10-anthraquinone and 2,3,6,7-tetramethyl-9,10-anthraquinone; 1,4-anthraquinone and 1,4-anthraquinone derivatives such as 9-methoxy-1,4-anthraquinone; and acenaphthenequinone and derivatives thereof.

Of these, from the viewpoint of achieving excellent stability of the battery performance, preferred is 1,4-naphthoquinone or a derivative thereof, and especially preferred examples of the derivatives include 2-methyl-1,4-naphthoquinone, 6-methyl-1,4-naphthoquinone, 2-methoxy-1,4-naphthoquinone and 5-methoxy-1,4-naphthoquinone.

Specific examples of 1,4-benzoquinone derivatives include 2,6-di-tert-butyl-1,4-benzoquinone, methyl-1,4-benzoquinone, 2,5-dimethyl-1,4-benzoquinone, 2-phenyl-1,4-benzoquinone, 2,3-dimethoxy-5,6-dimethyl-1,4-benzoquinone, 2-isopropyl-5-methyl-1,4-benzoquinone, 2,3-dimethyl-1,4-benzoquinone, 2,3,5,6-tetramethyl-1,4-benzoquinone, 2,6-dimethyl-1,4-benzoquinone, 2,6-dimethoxy-1,4-benzoquinone, 2,3-dimethoxy-5-methyl-1,4-benzoquinone, 2,3,5-trimethyl-1,4-benzoquinone, 2,3-dimethoxy-1,4-benzoquinone, 2,3,5-trimethoxy-1,4-benzoquinone, 2,3,5,6-tetramethoxy-1,4-benzoquinone, 2,3,5,6-tetrafluoro-1,4-benzoquinone, 2,5-diphenyl-1,4-benzoquinone, 2,5-di-tert-butyl-1,4-benzoquinone, 2,3,5,6-tetraisopropyl-1,4-benzoquinone, 2-methoxy-5-methyl-1,4-benzoquinone, 2,5-dimethyl-1,4-benzoquinone, 2-tert-butyl-5-methyl-1,4-benzoquinone, 2-tert-butyl-1,4-benzoquinone, 2,5-dimethoxy-1,4-benzoquinone and methoxy-1,4-benzoquinone.

Of these, preferred is methyl-1,4-benzoquinone, 2,5-dimethyl-1,4-benzoquinone, 2,3-dimethyl-1,4-benzoquinone, 2,6-dimethyl-1,4-benzoquinone, 2,3,5,6-tetramethyl-1,4-benzoquinone or 2,3,5,6-tetrafluoro-1,4-benzoquinone.

With respect to the range of the concentration of the organic compound in the non-aqueous electrolyte, the lower limit of the range is generally 0.1% by weight or more, based on the weight of the non-aqueous electrolyte (100% by weight). When the concentration is less than the above range, the problem of lowering of the voltage during the high-rate discharge cannot be satisfactorily improved. The concentration range is preferably 0.5% by weight or more, further preferably 1% by weight or more. The upper limit of the range is generally 10% by weight or less.
When the concentration is more than the above range, the battery properties, excluding the high-rate discharge properties, are adversely affected. The concentration range is preferably 5% by weight or less, further preferably 3% by weight or less.

In the second embodiment of the present invention, the non-aqueous electrolyte comprises at least one organic compound, wherein the organic compound satisfies the requirement that a γ-butyrolactone solution of LiBF₄ having a concentration of 1 mol/l into which the organic compound is incorporated in an amount of 1.0% by weight have a reduction potential of 2.5 V or higher and a quantity of electricity in reduction reaction per electrode area of 1,000 mC/cm² or lower. The reduction potential is a value as measured by a linear sweep voltammetry method, specifically, the reduction potential is a potential at which a current flows at a current density of -0.5 mA/cm² when the potential of a working electrode is swept from the self-potential to the reduction side (lower potential side) at a sweep rate of 5 mV/second at 25°C, as measured with respect to the solution comprising the organic compound contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side. The quantity of electricity in reduction reaction per electrode area is a value obtained by dividing an absolute value of quantity of electricity flowing when the potential is swept from the self-potential to 0.2 V in the above-mentioned linear sweep voltammetry method by the bottom area of the working electrode.

In a primary battery using the non-aqueous electrolyte comprising the above-mentioned organic compound, it is presumed that the organic compound in the non-aqueous electrolyte rapidly receives electrons as compared to a cathode active material in the solid state,and is reduced at a potential close to the positive electrode potential upon discharging, and can suppress overvoltage caused during the high-rate discharge, thus preventing the lowering of voltage. For suppressing overvoltage and preventing the potential from being reduced to be much lower than the positive electrode potential upon discharging, the reduction potential is 2.5 V or higher, for example, 2.5 to 3.5 V. For preventing the deterioration of battery performance due to too high reactivity, the quantity of electricity in reduction reaction per electrode area is 1,000 mC/cm² or lower, for example, 50 to 700 mC/cm².

As specific examples of the organic compounds, there can be mentioned the organic compounds mentioned in the first embodiment, but the organic compound is not limited to these. With respect to the range of the concentration of the organic compound in the non-aqueous electrolyte, the lower limit of the range is generally 0.1% by weight or more, based on the weight of the non-aqueous electrolyte (100% by weight). When the concentration is less than the above range, the problem of lowering of the voltage during the high-rate discharge cannot be satisfactorily improved. The concentration range is preferably 0.5% by weight or more, further preferably 1% by weight or more. The upper limit of the range is generally 10% by weight or less, preferably 5% by weight or less, further preferably 3% by weight or less. When the concentration is more than the above range, the battery properties, excluding the high-rate discharge properties, are adversely affected.

In each of the embodiments, the non-aqueous electrolyte for primary battery of the present invention can further contain other components if necessary.
Examples of other components include various additives for forming a film on the surface of the active material for battery. Examples of such additives for forming a film include vinilene carbonate, vinylethylene carbonate, propane sultone, ethylene sulfite, benzoic acid esters and aromatic dicarboxylic acid esters.

The present invention is also directed to a non-aqueous electrolyte for a primary battery, which has a reduction potential of 2.5 V or higher and a quantity of electricity in reduction reaction per electrode area of 1,000 mC/cm² or lower. The reduction potential is a value as measured by a linear sweep voltammetry method, specifically, the reduction potential is a potential at which a current flows at a current density of -0.5 mA/cm² when the potential of a working electrode is swept from the self-potential to the reduction side (lower potential side) at a sweep rate of 5 mV/second at 25°C, as measured with respect to the non-aqueous electrolyte contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side. The quantity of electricity in reduction reaction per electrode area is a value obtained by dividing an absolute value of quantity of electricity flowing when the potential is swept from the self-potential to 0.2 V in the above-mentioned linear sweep voltammetry method by the bottom area of the working electrode.

The non-aqueous electrolyte can be obtained by appropriately selecting the solute and non-aqueous solvent to prepare an electrolyte, and formulating into the electrolyte prepared the organic compound described in the first embodiment or second embodiment.

The present invention is also directed to a non-aqueous electrolyte primary battery using the non-aqueous electrolyte for primary battery of the present invention, and having a positive electrode and a negative electrode comprised of metallic lithium or a lithium alloy.

The positive electrode generally comprises an active material, a binder and a conductive material. Examples of active materials include MnO₂, graphite fluoride or carbon fluoride {(CFₓ)ₙ; 0 < X ≦1}, V₂O₅, CuO, CuS, FeS₂, TiS₂, Ag₂CrO₄, MoO₃, Bi₂O₃, Bi₂Pb₂O₅, and Cu₄O(PO₄)₂. Of these, especially preferred is graphite fluoride or carbon fluoride {(CFₓ)ₙ; 0 < X ≦ 1} from the viewpoint of achieving excellent storage stability at high temperature.

Examples of binders include polyvinylidene fluoride, polytetrafluoroethylene, styrene-butadiene rubbers, isoprene rubbers and butadiene rubbers. Examples of conductive materials include acetylene black, carbon black, graphite and metal powder, such as powdery nickel, aluminum, titanium or stainless steel.

With respect to the method for producing the positive electrode, there is no particular limitation, and a known method can be used. For example, the positive electrode can be produced by optionally adding a binder, a thickening agent, a conductive material or a solvent to an active material to form a slurry, and applying the slurry to a substrate for current collector and drying it. Alternatively, the positive electrode can be produced in the form of a sheet electrode by rolling directly the active material or in the form of a pellet electrode by compression-molding directly the active material. Examples of thickening agents include carboxymethyl cellulose, methyl cellulose, hydroxymethyl cellulose, ethyl cellulose, polyvinyl alcohol, oxidized starch, phosphorylated starch and casein.

As the negative electrode, metallic lithium or a lithium alloy is used. Examples of lithium alloys include Li-Al, Li-Si, Li-Sn, Li-NiSi, and Li-Pb. With respect to the method for producing the negative electrode, there is no particular limitation, and, for example, the negative electrode can be produced by punching a sheet of metallic lithium or a lithium alloy to a desired size.

With respect to the current collector available in the electrode, examples of positive electrode current collectors include metals, such as aluminum, titanium, tantalum and stainless steel, and alloys thereof, preferably aluminum and alloys thereof, and examples of negative electrode current collectors include metals, such as copper, nickel and stainless steel, and alloys thereof, preferably copper.

The primary battery generally has a separator disposed between the positive electrode and the negative electrode. With respect to the material for or form of the separator used, there is no particular limitation, but it is preferred to use a porous sheet or nonwoven fabric comprised of a material having stability to the electrolyte and excellent liquid retaining ability, e.g., polyethylene, polypropylene or polyphenylene sulfide.

With respect to the method for producing the primary battery, there is no particular limitation, and a method appropriately selected from known methods can be used.

With respect to the shape of the primary battery, there is no particular limitation, and a cylinder type comprising sheet electrodes and a separator which are together spirally wound, a cylinder type having an inside out structure using pellet electrodes and a separator in combination, or a coin type comprising pellet electrodes and a separator which are stacked on one another can be used.

### Examples

The present invention will be described in more detail with reference to the following Examples, which should not be construed as limiting the scope of the present invention.

In the following Examples, a linear sweep voltammetry evaluation was conducted as follows.

### Linear sweep voltammetry evaluation

The electrolytes in the Examples were individually placed in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side. Then, the potential of the working electrode was swept to the reduction side (lower potential side) from the self-potential to 0.2 V at a sweep rate of 5 mV/second at 25°C.

### Reduction potential

A potential at which the current density reached -0.5 mA/cm² in the above cyclic voltammetry evaluation was used as a reduction potential.

### Quantity of electricity in reduction reaction per electrode area

A value obtained by dividing an absolute value of quantity of electricity flowing when the potential was swept to 0.2 V in the above cyclic voltammetry evaluation by the bottom area of the working electrode was used as a quantity of electricity in reduction reaction per electrode area.

In the following Examples, preparation and evaluation of a battery were conducted as follows.

### Preparation of positive electrode

A mixture comprising 80% by weight of graphite fluoride as a cathode active material, 10% by weight of acetylene black as a conductive material, and 10% by weight of polytetrafluoroethylene as a binder was kneaded and then, subjected to pressure molding at a pressure of 50 kgf/cm² to obtain a molded article in a disc form having a diameter of 12 mm and a thickness of 0.5 mm, and the molded article was used as a positive electrode.

### Preparation of negative electrode

A disc having a diameter of 14 mm was obtained by punching a metallic lithium sheet having a thickness of 0.5 mm, and used as a negative electrode.

### Assembling of battery

A lithium primary battery was prepared using a 2032 type coin cell casing made of stainless steel in a dry box having an atmosphere of argon gas. Specifically, a positive electrode was placed on a positive electrode can, and polypropylene nonwoven fabric as a separator was placed thereon, and fixed by a gasket made of polypropylene. Then, a negative electrode was placed on the separator, and a spacer for controlling the thickness was placed and then the electrolyte in each of the Examples was added so that the contents of the battery were satisfactorily impregnated with the electrolyte. Finally, a negative electrode can was placed and the battery was sealed to obtain a lithium primary battery. The battery in each of the Examples and Comparative Examples was designed so that the capacity was about 40 mAh at 2.0 V corresponding to the discharge lower limit.

### Evaluation of battery

As a battery evaluation, a high-rate discharge test was conducted. Constant current discharge at 4 mA was conducted at 25°C, and a battery voltage measured immediately after the start of the discharge was compared between the batteries. A high battery voltage means that the lowering of voltage due to overvoltage is small, and a battery having such a voltage enables an electric device to work stably during the high-rate discharge.

### Example 1

As a non-aqueous electrolyte, a γ-butyrolactone solution of LiBF₄ having a concentration of 1 mol/l into which 1,4-naphthoquinone was incorporated in an amount of 1% by weight was used. A linear sweep voltammetry evaluation was conducted as mentioned above. With respect to the lithium primary battery prepared by the above-mentioned method, a high-rate discharge test was conducted. The results are shown in Table 1.

### Example 2

As a non-aqueous electrolyte, a γ-butyrolactone solution of LiBF₄ having a concentration of 1 mol/l into which 2-methyl-1,4-naphthoquinone was incorporated in an amount of 1% by weight was used. A linear sweep voltammetry evaluation, the preparation of a lithium primary battery, and a high-rate discharge test were conducted in the same manner as in Example 1. The results are shown in Table 1.

### Example 3

As a non-aqueous electrolyte, a γ-butyrolactone solution of LiBF₄ having a concentration of 1 mol/l into which 2,5-dimethyl-1,4-benzoquinone was incorporated in an amount of 1% by weight was used. A linear sweep voltammetry evaluation, the preparation of a lithium primary battery, and a high-rate discharge test were conducted in the same manner as in Example 1. The results are shown in Table 1.

### Example 4

As a non-aqueous electrolyte, a γ-butyrolactone solution of LiBF₄ having a concentration of 1 mol/l into which 2,3,5,6-tetramethyl-1,4-benzoquinone was incorporated in an amount of 1% by weight was used. A linear sweep voltammetry evaluation, the preparation of a lithium primary battery, and a high-rate discharge test were conducted in the same manner as in Example 1. The results are shown in Table 1.

### Example 5

As a non-aqueous electrolyte, a γ-butyrolactone solution of LiBF₄ having a concentration of 1 mol/l into which 2,3,5,6-tetrafluoro-1,4-benzoquinone was incorporated in an amount of 1% by weight was used. A linear sweep voltammetry evaluation, the preparation of a lithium primary battery, and a high-rate discharge test were conducted in the same manner as in Example 1. The results are shown in Table 1.

### Example 6

As a non-aqueous electrolyte, a γ-butyrolactone solution of LiBF₄ having a concentration of 1 mol/l containing no other components was used. A linear sweep voltammetry evaluation, the preparation of a lithium primary battery, and a high-rate discharge test were conducted in the same manner as in Example 1. The results are shown in Table 1.

### Example 7

As a non-aqueous electrolyte, a γ-butyrolactone solution of LiBF₄ having a concentration of 1 mol/l into which 1,4-benzoquinone was incorporated in an amount of 1% by weight was used. A linear sweep voltammetry evaluation, the preparation of a lithium primary battery, and a high-rate discharge test were conducted in the same manner as in Example 1. The results are shown in Table 1.

### Example 8

As a non-aqueous electrolyte, a γ-butyrolactone solution of LiBF₄ having a concentration of 1 mol/l into which propane sultone was incorporated in an amount of 1% by weight was used. A linear sweep voltammetry evaluation, the preparation of a lithium primary battery, and a high-rate discharge test were conducted in the same manner as in Example 1. The results are shown in Table 1.

| | Linear sweep voltammetry evaluation | | High-rate discharge test |
|---|---|---|---|
| | Reduction potential (V) | Quantity of electricity in reduction reaction per electrode area (mC/cm²) | Voltage (V) |
| Example 1 | 2.64 | 171 | 2.44 |
| Example 2 | 2.56 | 171 | 2.39 |
| Example 3 | 2.76 | 109 | 2.35 |
| Example 4 | 2.57 | 524 | 2.41 |
| Example 5 | 3.25 | 167 | 2.63 |
| Example 6 (Comparative) | - | 14 | 2.25 |
| Example 7 (Comparative) | 2.88 | 1325 | 2.18 |
| Example 8 (Comparative) | - | 22 | 2.15 |

| | | | |
|---|---|---|---|
| * In Examples 6 and 8, the current density did not reach -0.5 mA/cm², and no reduction potential was obtained. | | | |

The battery in each of Examples 1 to 5 using the non-aqueous electrolyte of the present invention has a satisfactorily high voltage in the high-rate discharge test, and, from this, it is found that the lowering of voltage due to overvoltage is prevented and thus the battery enables an electric device to work stably during the high-rate discharge. The battery in each of Examples 6 to 8, which are comparative Examples, has a low voltage in the high-rate discharge test, and, from this, it is found that the lowering of voltage due to overvoltage cannot be prevented. Particularly, in Example 7, the quantity of electricity in reduction reaction per electrode area is large in the linear sweep voltammetry evaluation, and therefore it is presumed that there is an influence of the high reactivity of the organic substance added. Further, in Example 8, a reduction potential of 2.5 V or higher is not obtained in the linear sweep voltammetry evaluation, and therefore it is presumed that an effect to suppress overvoltage during the high-rate discharge could not be obtained.

### INDUSTRIAL APPLICABILITY

In the present invention, there is provided a non-aqueous electrolyte for use in a primary battery, which is advantageous in that the primary battery using the non-aqueous electrolyte suffers less lowering of voltage during the high-rate discharge and can work stably, and hence the present invention has high industrial utility.

## Claims

1. A non-aqueous electrolyte for a primary battery having a positive electrode and a negative electrode comprised of metallic lithium or a lithium alloy,
Wherein the non-aqueous electrolyte for a primary battery comprises at least one organic compound selected from the group consisting of 1,2-benzoquinone, 1,4-naphthoquinone, 1,2-naphthoquinone, 9,10-anthraquinone, 1,4-anthraquinone, acenaphthenequinone, and a derivative of 1,2-benzoquinone, 1,4-naphthoquinone, 1,2-naphthoquinone, 9,10-anthraquinone, 1,4-anthraquinone, acenaphthenequinone or 1,4-benzoquinone.

2. The non-aqueous electrolyte for a primary battery according to claim 1, wherein the derivative is a substituted derivative which is substituted with at least one substituent selected from the group consisting of a halogen atom, a lower alkyl group, a lower alkoxy group, a phenyl group, a cyano group, an amino group, a nitro group, a carboxyl group and a sulfonyl group.

3. The non-aqueous electrolyte for a primary battery according to claim 1 or 2, wherein the electrolyte comprises at least one organic compound selected from the group consisting of 1,2-benzoquinone, 1,4-naphthoquinone, 1,2-naphthoquinone, 9,10-anthraquinone, 1,4-anthraquinone, acenaphthenequinone, and a derivative thereof.

4. The non-aqueous electrolyte for a primary battery according to claim 1 or 2, wherein the electrolyte comprises at least one organic compound which is a 1,4-benzoquinone derivative.

5. The non-aqueous electrolyte for a primary battery according to any one of claims 1 to 4, which contains the organic compound in an amount of 0.1 to 10% by weight, based on the weight of the non-aqueous electrolyte (100% by weight).

6. The non-aqueous electrolyte for a primary battery according to any one of claims 1 to 5, which contains γ-butyrolactone as a non-aqueous solvent.

7. A non-aqueous electrolyte primary battery comprising at least a positive electrode, a negative electrode comprised of metallic lithium or a lithium alloy, and the non-aqueous electrolyte according to any one of claims 1 to 6.

8. The non-aqueous electrolyte primary battery according to claim 7, wherein the positive electrode comprises an active material comprised of graphite fluoride or carbon fluoride represented by the formula: (CFₓ)ₙ (0 < X ≦ 1).

9. A non-aqueous electrolyte for a primary battery having a positive electrode and a negative electrode comprised of metallic lithium or a lithium alloy,
wherein the non-aqueous electrolyte for a primary battery comprises at least one organic compound,
wherein the organic compound satisfies the requirement that a γ-butyrolactone solution of LiBF₄ having a concentration of 1 mol/l into which the organic compound is incorporated in an amount of 1.0% by weight has a reduction potential of 2.5 V or higher and a quantity of electricity in reduction reaction per electrode area of 1,000 mC/cm² or lower,
wherein the reduction potential is a potential at which a current flows at a current density of -0.5 mA/cm² when the potential of a working electrode is swept to the reduction side at a sweep rate of 5 mV/second at 25°C, as measured with respect to the solution contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side,
wherein the quantity of electricity in reduction reaction per electrode area is a value obtained by dividing an absolute value of quantity of electricity flowing when the potential is swept from the self-potential to 0.2 V at 25°C by the bottom area of a working electrode, wherein the quantity of electricity is as measured with respect to the solution contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side.

10. The non-aqueous electrolyte for a primary battery according to claim 9, wherein the electrolyte contains the organic compound in an amount of 0.1 to 10% by weight, based on the weight of the non-aqueous electrolyte (100% by weight).

11. The non-aqueous electrolyte for a primary battery according to claim 9 or 10, wherein the electrolyte contains γ-butyrolactone as a non-aqueous solvent.

12. A non-aqueous electrolyte primary battery comprising at least a positive electrode, a negative electrode comprised of metallic lithium or a lithium alloy, and the non-aqueous electrolyte according to any one of claims 9 to 11.

13. The non-aqueous electrolyte primary battery according to claim 12, wherein the positive electrode comprises an active material comprised of graphite fluoride or carbon fluoride represented by the formula: (CFₓ)ₙ (0 < X ≦ 1).

14. A non-aqueous electrolyte for a primary battery having a positive electrode and a negative electrode comprised of metallic lithium or a lithium alloy,
wherein the non-aqueous electrolyte has a reduction potential of 2.5 V or higher and a quantity of electricity in reduction reaction per electrode area of 1,000 mC/cm² or lower,
wherein the reduction potential is a potential at which a current flows at a current density of -0.5 mA/cm² when the potential of a working electrode is swept to the reduction side at a sweep rate of 5 mV/second at 25°C, as measured with respect to the non-aqueous electrolyte contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side,
wherein the quantity of electricity in reduction reaction per electrode area is a value obtained by dividing an absolute value of quantity of electricity flowing when the potential is swept from the self-potential to 0.2 V at 25°C by the bottom area of a working electrode, wherein the quantity of electricity is as measured with respect to the non-aqueous electrolyte contained in an H-shaped cell having a working electrode comprised of 1.6 mmφ platinum having an exposed portion only at the bottom, a reference electrode comprised of lithium metal, a counter electrode comprised of a stainless steel plate, and a glass filter dividing the cell into a working electrode side and a counter electrode side.

15. The non-aqueous electrolyte for a primary battery according to claim 14, wherein the electrolyte contains γ-butyrolactone as a non-aqueous solvent.

16. A non-aqueous electrolyte primary battery comprising at least a positive electrode, a negative electrode comprised of metallic lithium or a lithium alloy, and the non-aqueous electrolyte according to claim 14 or 15.

17. The non-aqueous electrolyte primary battery according to claim 16, wherein the positive electrode comprises an active material comprised of graphite fluoride or carbon fluoride represented by the formula: (CFₓ)ₙ (0 < X ≦ 1).
